# EUROPEAN PATENT SPECIFICATION

(11) **EP 2 176 086 B1**
(45) Date of publication and mention of the grant of the patent: **08.01.2014**
(21) Application number: 08802961.6
(22) Date of filing: 05.08.2008
(51) Int. Cl.: B60K 15/03

(54) **PLASTIC FUEL TANK**
PLASTIKBRENNSTOFFTANK
RÉSERVOIR DE CARBURANT EN PLASTIQUE

(30) Priority: 03.08.2007 FR 0756944
(43) Date of publication of application: 21.04.2010
(73) Proprietor: Inergy Automotive Systems Research (Société Anonyme), 1120 Bruxelles (BE)
(72) Inventor: MARTIN, Philippe, 4040 Herstal (BE); DUPONT, Serge, 1800 Vilvoorde (BE)
(74) Representative: de la Bigne, Guillaume Michel Marie
(86) International application number: PCT/EP2008/060259
(87) International publication number: WO 2009/019263

(56) References cited:
- EP-A- 0 166 222
- EP-A- 1 460 109
- WO-A-02/079318
- WO-A-2004/113436
- WO-A-2006/101256
- JP-A- 10 158 414
- US-A1- 2006 074 158

## Description

The present invention relates to a plastic fuel tank, or to an accessory for such a tank, that is impermeable to gases and/or liquids.

Hollow bodies, in particular the tanks currently used for storing liquids and/or gases are usually constituted mainly of plastic due to the advantages in weight, mechanical strength, chemical resistance and ease of use, in particular when they have complex outer shapes.

Plastic tanks are widespread in motor vehicles, where they are used to contain various fluids : brake fluid, windscreen and headlamp washer fluids, tanks for various fuels (diesel, petrol, LPG) and additives.

It is often imperative, for automotive uses, to ensure the impermeability of onboard tanks, in particular in the case of fuel tanks (FTs).

Various techniques are known for making plastic articles impermeable. Two different approaches have resulted in solutions being proposed which have been used in the manufacturing processes of these articles.

The first is based on the surface treatment of the article by means of a plasma or a chemical reagent such as sulphuric anhydride or fluorine gas that is capable of modifying the molecules of the plastic located at the surface of the article. However, considering the fact that the emission standards laid down by current environmental regulations (EURO V, LEV II and PZEV for example) are increasingly strict, the tanks obtained via this technique do not have sufficiently high performance and might be no longer suitable in the near future.

Another approach consists in inserting into the thickness of the plastic that constitutes the article a layer comprising a particular material, usually a thermoplastic, which has a barrier property with respect to one or more gases or liquids. In the latter case, techniques for processing via coextrusion-blow moulding are widely used. As a barrier material, use is currently made of EVOH (ethylene/vinyl alcohol copolymer), fluoropolymers, polyamide, polyacrylonitriles, polyesters (PET, PBT, etc.), liquid crystal polymers (LCPs) and also polyvinylidene halides (PVDF, PVDC).

One drawback of this second approach lies in the complexity of the coextrusion technique and in the cost of the associated equipment, the extrusion of single-layer parisons being simpler and less expensive in terms of investment.

A fuel tank with all features of the preamble of claim 1 is known by document WO2/079318 A.

The object of the present invention is to provide (accessories for) FTs based on a plastic composition having barrier properties so that it does not require the application of a specific barrier layer.

For this purpose, the invention relates to a plastic fuel tank (accessory) according to claim 1.

The term "FT" is understood to mean, within the context of the invention, petrol, diesel or additive tanks for motor vehicles and also the impermeable accessories intended to equip these tanks. As accessories for tanks, mention may be made, non-limitingly, of : fill pipes, fuel transfer lines, canisters intended to contain a composition that retains the fuel vapours, valves of various types, etc.

Within the context of the invention, the term "accessory" is understood to mean :
- any functional object or device which is generally associated with the fuel tank in its usual mode of use or operation and which cooperates with the latter in order to fulfil certain useful functions ; or
- a support for one or more such devices.

Non-limiting examples of such devices are : a fill pipe, a base plate, a liquid pump, a level gauge, delivery tubes, reservoirs or baffles internal to the fuel tank, ventilation devices (valves, pipes, etc.) and stiffening bars. It is understood that when the invention applies to an accessory, it may relate to one part of the latter only (for example : the pump housing).

The expression "multiphase material" is understood to mean a material comprising at least two phases of different nature and/or composition. According to the invention, one of these phases is based on HDPE and the other on a barrier polymer. This material may of course comprise other phases (for example : a solid additive or filler in dispersed form : see further on).

The expression "morphology that is structured on a nanoscopic scale" is in fact understood to mean that at least one of the phases has at least one submicron-sized dimension, typically of the order of hundreds, preferably tens, of nanometres, or even of the order of nanometres.

Preferably, it is a co-continuous structure (i.e. comprising at least two interpenetrated continuous phases, at least one of which comprises channels of nanoscale diameter) or a lamellar structure (comprising lamella or tubes, of which the thickness or diameter respectively is of the order of nanometres).

In the context of the invention, the barrier polymer may be chosen from those described above. Preferably, it is a polyamide, which may be either aliphatic or aromatic. Among the aliphatic polyamides, the following are preferred : homopolymers such as polyamide 6 (PA-6) or polyamide 6,6 (PA-6,6) or polyamide 11 or polyamide 12, or copolymers such as PA-6/12, PA-6/6,6 and copolymers based on polyamide blocks and polyether blocks. Among the aromatic polyamides, those of the MXD6 type give good results. These are polyamides based on m-xylenediamine (MXDA) polycondensed with an adipic acid and therefore comprising an aromatic ring in their main chain.

Generally, HDPE and the barrier polymer are not compatible. In order to make them compatible, it is known to add a compatibilizing agent and/or to functionalize the HDPE. However, a simple blend of functionalized HDPE and polyamide does not necessarily result in a nanostructured material. In order to obtain nanostructured materials based on these polymers, one practical means consists in quenching a thermodynamically unstable structure obtained by blending these two polymers at high temperature and/or under high shear. However, these structures are by definition unstable and therefore do not survive a subsequent processing operation. It is therefore necessary to generate said structure and quench it at the same time as the tank or accessory is manufactured, which is not practical.

The morphology of the material according to claim 1 structured on a nanoscopic scale is moreover thermodynamically stable.

The expression "based on" is understood to mean that the material is predominantly composed of such a copolymer, which does not rule out the presence of other polymers (for example, virgin, unfunctionalized HDPE ; fillers, etc.).

To date, two methods are mainly known for synthesizing such polymers : either by reactive extrusion of the two separate polymers, or by controlled (also known as "living") radical polymerization.

According to the 1^{st} variant, the copolymer based on the nanostructured multiphase material is obtained by blending (preferably by reactive extrusion in a twin-screw or single-screw extruder) a functionalized HDPE, preferably one that is functionalized along the entire length of its chains, with a barrier polymer having reactive chain ends. The use of an internal mixer of the Brabender or Banbury type may also be envisaged.

The expression "functionalized HDPE" is understood to mean an HDPE having functional groups that are capable of reacting with the chain ends of the barrier polymer (amines in the case of polyamides), such as acid, anhydride, alcohol or epoxide functional groups. Maleic anhydride (MAH) gives good results, in particular with PA-6. It is understood that several different functional groups may be present at the same time.

The parameters that a person skilled in the art must optimize in this variant are mainly the molecular weight of the starting polymers, and the distribution of the reactive functional groups over the HDPE, which distribution must be as even as possible.

The copolymers obtained by this method generally also contain monomers that have not reacted and that contribute in fact to the thermodynamic stability of the multiphase material.

According to a 2^{nd} variant, the copolymer based on the nanostructured multiphase material is obtained by controlled radical polymerization (ATRP (Atom Transfer Radical Polymerization), RAFT (Reversible Addition Fragmentation chain Transfer), NMP (Nitroxide Mediated Polymerization), etc.).

One particularly advantageous variant of the invention consists in adding to one of the phases or even to both phases (HDPE and barrier polymer), nanofillers of the following types : clay, montmorillonite, eponite, vermiculite, carbon nanotubes, carbon sheets, graphene, fibres, etc. with the aim of further increasing the barrier and mechanical properties of its phases and therefore of the nanostructured layer of the FT according to the invention. In particular, in the case of the co-continuous structures described above, such fillers may help to obstruct the HDPE-based channels and therefore to improve the impermeability of the structure.

One advantage of the invention is that the tank (and/or the accessories of this tank) may have a single-layer structure, i.e. not comprising a layer other than that based on the nanostructured material. This layer could however be subjected to a surface treatment (see above).

The tanks according to the invention may be obtained by any known moulding technique, but preferably they are obtained by extrusion-blow moulding of a parison having a layer based on nanostructured material as described above. However, depending on the MFI (Melt Flow Index) of the material and on the type of article, other processing techniques may be used. But when the invention is applied to an accessory such as a ventilation valve, a delivery tube, a plate, a pump body, etc. the processing technique generally used is injection moulding, which generally requires resins of greater fluidity than extrusion-blow moulding.

## Claims

1. Plastic fuel tank or accessory for such a tank, based on a plastic composition, whereby the plastic composition comprises a layer based on high-density polyethylene (HDPE), dispersed in which is a barrier polymer so as to constitute a multiphase material having a morphology that is structured on a nanoscopic scale, **characterized in that** said multiphase material being based on a copolymer of HDPE and of the barrier polymer having blocks of adequate length to respectively form phases exclusively based on one or other of the polymers and to self-assemble or self-structure on a nanoscopic scale.

2. Tank or accessory according to the preceding claim, **characterized in that** the nanoscopic structure is a co-continuous structure or a lamellar structure.

3. Tank or accessory according to any one of the preceding claims, **characterized in that** the barrier material is an aliphatic or aromatic polyamide chosen from polyamide 6 (PA-6), polyamide 6,6 (PA-6,6), PA-6/12, PA-6/6,6, copolymers based on polyamide blocks and polyether blocks, and aromatic polyamides of the MXD6 type.

4. Tank or accessory according to any of the preceding claims, **characterized in that** the copolymer is obtained by blending a functionalized HDPE with a barrier polymer having reactive chain ends.

5. Tank or accessory according to the preceding claim, **characterized in that** the HDPE comprises acid, anhydride, alcohol or epoxide functional groups.

6. Tank or accessory according to any of claims 1 to 3, **characterized in that** the copolymer is obtained by controlled radical polymerization.

7. Tank or accessory according to any one of the preceding claims, **characterized in that** at least one of the phases of the nanostructured material comprises at least one nanofiller.

8. Tank or accessory according to any one of the preceding claims, **characterized in that** it has a single layer structure.

## Patentansprüche

1. Kunststoffkraftstofftank oder Zubehör für einen solchen Tank, der auf einer Kunststoffzusammensetzung basiert, wobei die Kunststoffzusammensetzung eine Schicht umfasst, die auf Polyethylen von hoher Dichte (HDPE) basiert und in der ein Barrierepolymer derart dispergiert ist, dass ein mehrphasiges Material mit einer Morphologie gebildet wird, die im Nanomaßstab strukturiert ist, **dadurch gekennzeichnet, dass** das mehrphasige Material auf einem Copolymer von HDPE und des Barrierepolymers basiert, das Blöcke von angemessener Länge aufweist, um jeweilige Phasen zu bilden, die ausschließlich auf dem einen oder dem anderen der Polymere basieren, und um sich in einem Nanomaßstab selbst zu organisieren oder sich selbst zu strukturieren.

2. Tank oder Zubehör nach dem vorherigen Anspruch, **dadurch gekennzeichnet, dass** die Nanostruktur eine cokontinuierliche Struktur oder eine lamellare Struktur ist.

3. Tank oder Zubehör nach einem der vorstehenden Ansprüche, **dadurch gekennzeichnet, dass** das Barrierematerial ein aliphatisches oder aromatisches Polyamid ist, das ausgewählt ist aus Polyamid 6 (PA-6), Polyamid 6,6 (PA-6,6), PA-6/12, PA-6/6,6, Copolymeren, die auf Polyamidblöcken und Polyetherblöcken basieren, und aromatischen Polyamiden vom Typ MXD6.

4. Tank oder Zubehör nach einem der vorhergehenden Ansprüche, **dadurch gekennzeichnet, dass** das Copolymer durch Mischen eines funktionalisierten HDPE mit einem Barrierepolymer mit reaktiven Kettenenden erhalten wird.

5. Tank oder Zubehör nach einem der vorhergehenden Ansprüche, **dadurch gekennzeichnet, dass** das HDPE Säure, Anhydrid, Alkohol oder funktionelle Epoxidgruppen umfasst.

6. Tank oder Zubehörteil nach einem der Ansprüche 1 bis 3, **dadurch gekennzeichnet, dass** das Copolymer durch gesteuerte radikalische Polymerisation erhalten wird.

7. Tank oder Zubehör nach einem der vorhergehenden Ansprüche, **dadurch gekennzeichnet, dass** mindestens eine der Phasen des nanostrukturierten Materials mindestens einen Nanofüllstoff umfasst.

8. Tank oder Zubehör nach einem der vorhergehenden Ansprüche, **dadurch gekennzeichnet, dass** er eine einschichtige Struktur aufweist.

## Revendications

1. Réservoir à carburant en matière plastique ou accessoire pour un tel réservoir, basé sur une composition plastique, dans lequel la composition plastique comporte une couche basée sur un polyéthylène haute densité (HDPE), dispersé dans lequel se trouve un polymère barrière de manière à constituer une matière à phases multiples ayant une morphologie qui est structurée à une échelle nanoscopique, **caractérisé en ce que** la matière à phases multiples est basée sur un copolymère de HDPE et du polymère barrière ayant des séquences de longueur appropriée pour former respectivement des phases exclusivement basées sur l'un ou l'autre des polymères et pour s'auto-assembler ou s'auto-structurer à une échelle nanoscopique.

2. Réservoir ou accessoire selon la revendication précédente, **caractérisé en ce que** la structure nanoscopique est une structure co-continue ou une structure lamellaire.

3. Réservoir ou accessoire selon l'une quelconque des revendications précédentes, **caractérisé en ce que** la matière barrière est un polyamide aliphatique ou aromatique choisi parmi le polyamide 6 (PA-6), le polyamide 6,6 (PA-6,6), le PA-6/12, le PA-6/6,6, des copolymères basés sur des séquences de polyamide et des séquences de polyéther, et des polyamides aromatiques du type MXD6.

4. Réservoir ou accessoire selon l'une quelconque des revendications précédentes, **caractérisé en ce que** le copolymère est obtenu en mélangeant un HDPE fonctionnalisé avec un polymère barrière ayant des extrémités de chaîne réactives.

5. Réservoir ou accessoire selon la revendication précédente, **caractérisé en ce que** le HDPE comporte des groupes fonctionnels acide, anhydride, alcool ou époxyde.

6. Réservoir ou accessoire selon l'une quelconque des revendications 1 à 3, **caractérisé en ce que** le copolymère est obtenu par une polymérisation radicalaire contrôlée.

7. Réservoir ou accessoire selon l'une quelconque des revendications précédentes, **caractérisé en ce qu'**au moins une des phases de la matière nanostructurée comporte au moins une nanocharge.

8. Réservoir ou accessoire selon l'une quelconque des revendications précédentes, **caractérisé en ce qu'**il présente une structure monocouche.
